# EUROPEAN PATENT SPECIFICATION

(11) **EP 2 843 523 B1**
(45) Date of publication and mention of the grant of the patent: **18.03.2020**
(21) Application number: 13781119.6
(22) Date of filing: 24.04.2013
(51) Int. Cl.: G06F 3/048, G06F 3/041, H04N 1/00, H04L 29/08, G06F 3/0488

(54) **FILE TRANSMISSION METHOD AND TERMINAL**
DATEIÜBERTRAGUNGSVERFAHREN UND ENDGERÄT
PROCÉDÉ DE TRANSMISSION DE FICHIER ET TERMINAL

(30) Priority: 24.04.2012 CN 201210123205
(43) Date of publication of application: 04.03.2015
(73) Proprietor: Huawei Device Co., Ltd., Dongguan, Guangdong 523808 (CN)
(72) Inventor: CHEN, Lei, Shenzhen Guangdong 518129 (CN)
(74) Representative: Thun, Clemens
(86) International application number: PCT/CN2013/074637
(87) International publication number: WO 2013/159700

(56) References cited:
- WO-A1-2011/098618
- CN-A- 101 945 499
- CN-A- 102 271 179
- CN-A- 102 419 689
- CN-A- 102 707 880
- US-A1- 2009 140 986
- US-A1- 2009 244 015
- US-A1- 2010 083 189
- US-A1- 2011 209 100
- US-A1- 2012 077 436
- Kent Chen: "[How To] Use Dual Monitors in Remote Desktop Session on Windows 7 - Next of Windows", , 5 February 2010 (2010-02-05), XP055554517, Retrieved from the Internet: URL:https://www.nextofwindows.com/how-to-u se-dual-monitors-in-remote-desktop-session -on-windows-7 [retrieved on 2019-02-11]

## Description

### TECHNICAL FIELD

The present invention relates to the field of data transfer, and in particular, to a file transfer method and a terminal.

### BACKGROUND

With continuous development of electronic technologies, functions of terminals are increasingly improved. A user not only can use a terminal to work and play games, but also can save a large number of files in the terminal and install many application programs. Therefore, there are scenarios in which these files and application programs may need to be transferred.

In the prior art, when using a terminal to transfer a file, a user needs to select a to-be-transferred file at a sending end for file transfer and select a used transfer manner and a receiving end for file receiving; and when the receiving end receives the file, the user needs to select at the receiving end whether to receive the file.

For example, US 2009/0140986A1 refers to a method, apparatus, system and computer program product for transferring files stored on a source device to a target device by dragging and dropping the file from the source device touchscreen to the target device touchscreen. When the source device detects that the user has dragged the file to the edge, or other predefined location, of the source device touchscreen, the source device will automatically identify and establish a connection with the target device. Once the connection has been established, an image or icon associated with the file can be transferred to the target device, so that the user of the target device can indicate the location to which the file should be transferred by dragging the icon to that location. Once the target device user drops the icon at the predefined location, the file can be transferred to that location.

Further, US 2010/0083189A1 refers to a method and apparatus for coordinating transfer of information between ones of a plurality of devices including a coordinating device and at least one other device. In one embodiment, a method includes detecting selection of an item available at a first one of the devices, detecting a gesture-based command for the selected item, identifying a second one of the devices based on the gesture-based command and a spatial relationship between the coordinating device and the second one of the devices, and initiating a control message adapted for enabling the first one of the devices to propagate the selected item toward the second one of the devices. The control message is adapted for enabling the first one of the devices to propagate the selected item toward the second one of the devices. The first one of the devices on which the item is available may be the coordinating device or another device.

During the implementation of the present invention, it is found that the prior art has the following disadvantages::
During file transfer, the user needs to select the transfer manner each time when a file is transferred, and the user needs to select whether to receive each time when a file is received. As a result, the operation steps are tedious, and when a quantity of to-be-transferred files is large, the transfer efficiency is low.

### SUMMARY

To simplify operation steps of file transfer and improve the transfer efficiency, the present invention provides a file transfer method and a file sending terminal. In a first aspect a file transfer method performed by a file sending terminal is provided, the method comprising:
- detecting a screen touching action of a user of the file sending terminal;
- after confirming that the screen touching action is a preset file transfer action, scanning for a file receiving terminal that establishes a connection with the file sending terminal and determining a to-be-transferred file according to the screen touching action;
- after confirming that the screen touching action is the preset file transfer action, performing the steps:
   ∘ if the detected screen touching action is a single-point screen touching action and the single-point screen touching action is the preset file transfer action, determining as an instruction type a file copying,
   ∘ if the to-be-transferred file is currently displayed in a full screen on a screen of the file sending terminal, the detected screen touching action is a multi-point screen touching action, and a screen touching action of at least one point is the preset file transfer action, determining that the instruction type is a file displaying,
   wherein in a first alternative, the multi-point screen touching action comprises a first touching action of three points and tracks of two points of the three points on the screen of the file sending terminal gradually depart from each other and a track of a third point of the three points moves out of a left edge of file sending terminal,
   or,
   in a second alternative instead of the first alternative,
   the multi-point screen touching action comprises a second touching action of three points and tracks of two points of the three points on a screen of the file sending terminal gradually depart from each other and a track of a third point of the three points moves out of a right edge of file sending terminal;
- if the instruction type is the file copying, performing the steps of:
   ∘ sending a first file transfer instruction carrying the instruction type of the file copying and file information of the to-be-transferred file to the file receiving terminal, wherein the file information comprises at least one of a file name, a format, a type, and a size,
   ∘ after the sending of the first file transfer instruction, receiving a first confirmation information returned by the file receiving terminal, and subsequently sending the to-be-transferred file to the file receiving terminal that returns the first confirmation information,
- if the instruction type is the file displaying, performing the steps of:
   ∘ sending a second file transfer instruction carrying the instruction type of the file displaying and the file information of the to-be-transferred file to the file receiving terminal, wherein the file information comprises at least one of the file name, the format, the type, and the size,
   ∘ after the sending of the second file transfer instruction, receiving a second confirmation information returned by the file receiving terminal,
   ∘ transferring the to-be-transferred file and display information to the file receiving terminal that returns the second confirmation information, wherein the display information contains:
      ▪ in the first alternative a first display range being pixels of a left half of the to be transferred file, wherein the display range is used for controlling the file receiving terminal to display the left half of the to be transferred file,
      ▪ in the second alternative a second display range being pixels of a right half of the to be transferred file, wherein the display range is used for controlling the file receiving terminal to display the right half of the to be transferred file;
   ∘ displaying in the first alternative the right half of the to be transferred file, or
   displaying in the second alternative the left half of the to be transferred file.

In a first implementation form of the first aspect, after the transferring the to-be-transferred file and display information to the file receiving terminal that returns the confirmation information, the method further comprises:
adjusting the display information according to a subsequent screen touching action, and sending the adjusted display information to the file receiving terminal.

In a second aspect a file sending terminal is provided configured and intended to perform any of the above methods.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a file transfer method according to Embodiment 1 of the present invention;
FIG. 2 is a flowchart of another file transfer method according to Embodiment 1 of the present invention;
FIG. 3 is a flowchart of a file transfer method according to Embodiment 2 of the present invention;
FIG. 4 is a flowchart of a file transfer method according to Embodiment 3 of the present invention;
FIG. 5 is a schematic structural diagram of a file sending terminal according to Embodiment 4 of the present invention;
FIG. 6 is a schematic structural diagram of a transferring module according to Embodiment 4 of the present invention;
FIG. 7 is a schematic structural diagram of a sending unit according to Embodiment 4 of the present invention;
FIG. 8 is a schematic structural diagram of a transferring unit according to Embodiment 4 of the present invention;
FIG. 9 is a schematic structural diagram of a file receiving terminal according to Embodiment 5 of the present invention; and
FIG. 10 is a schematic structural diagram of a file transfer system according to Embodiment 6 of the present invention.

### DESCRIPTION OF EMBODIMENTS

To make the objectives, technical solutions, and advantages of the present invention clearer, the following further describes the embodiments of the present invention in detail with reference to the accompanying drawings. In this description, embodiments 1, 3 and 4 describe in detail the claimed invention, and embodiments 2, 5 and 6 describe examples not covered by the claims but helpful for understanding the invention.

### Embodiment 1

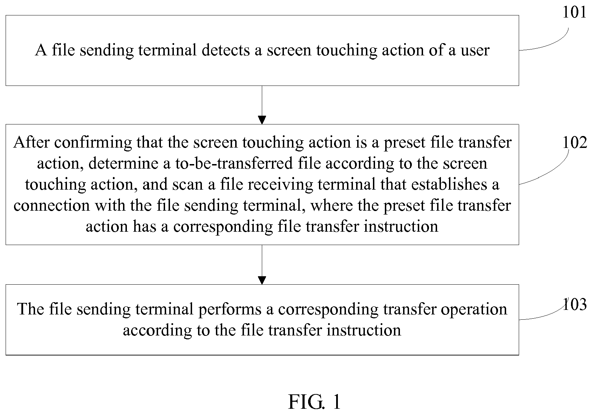

This embodiment provides a file transfer method. The method may be executed by a file sending terminal. Referring to FIG. 1, a specific process of the method is as follows:
101: A file sending terminal detects a screen touching action of a user.
102: After confirming that the screen touching action is a preset file transfer action, determine a to-be-transferred file according to the screen touching action, and scan a file receiving terminal that establishes a connection with the file sending terminal, where the preset file transfer action has a corresponding file transfer instruction.
103: The file sending terminal performs a corresponding transfer operation according to the file transfer instruction.

That the file sending terminal performs a corresponding transfer operation according to the file transfer instruction includes:
sending the corresponding file transfer instruction to the file receiving terminal, so that the file receiving terminal that receives the file transfer instruction returns confirmation information to the file sending terminal after detecting the screen touching action of the user within a preset time; and
receiving the confirmation information returned by the file receiving terminal, and transferring the to-be-transferred file to the file receiving terminal that returns the confirmation information.

Further, if it is found by scanning that multiple file receiving terminals establish connections with the file sending terminal, the sending the file transfer instruction to the file receiving terminal specifically includes:
sending, in a broadcast manner, the file transfer instruction to the multiple file receiving terminals found by scanning, so that the file receiving terminals that receive the file transfer instruction separately detect the screen touching action of the user, and return the confirmation information to the file sending terminal after detecting the screen touching action of the user.

Specifically, the sending the corresponding file transfer instruction to the file receiving terminal specifically includes:
determining an instruction type according to the detected screen touching action; and
sending the file transfer instruction carrying the instruction type and file information to the file receiving terminal, so that the file receiving terminal returns the confirmation information to the file sending terminal after confirming, according to the received file information, that an operation supports the instruction type,
where the file information includes at least one of a file name, a format, a type, and a size.

Further, the determining an instruction type according to the detected screen touching action specifically includes:
if the detected screen touching action is a single-point screen touching action and the single-point screen touching action is the preset file transfer action, determining that the instruction type is file copying; or
if the to-be-transferred file is currently displayed in a full screen, the detected screen touching action is a multi-point screen touching action, and the screen touching action of at least one point is the preset file transfer action, determining that the instruction type is file displaying.

A track that corresponds to the preset file transfer action and is formed by the action is a track of sliding out of an edge of the file sending terminal, or a track of a preset shape.

Further, the instruction type includes file copying or file displaying, and the transferring the to-be-transferred file to the file receiving terminal that returns the confirmation information specifically includes:
if the instruction type carried in the file transfer instruction is the file copying, transferring the to-be-transferred file to the file receiving terminal that returns the confirmation information, so that the file receiving terminal receives and stores the to-be-transferred file; and
if the instruction type carried in the file transfer instruction is the file displaying, transferring the to-be-transferred file and display information to the file receiving terminal that returns the confirmation information, so that the file receiving terminal displays the to-be-transferred file according to the display information.

In addition, after the transferring the to-be-transferred file and display information to the file receiving terminal that returns the confirmation information, so that the file receiving terminal displays the to-be-transferred file according to the display information, the method further includes:
adjusting the display information according to a subsequent screen touching action, and sending the adjusted display information to the file receiving terminal, so that the file receiving terminal adjusts the displayed to-be-transferred file according to the adjusted display information.

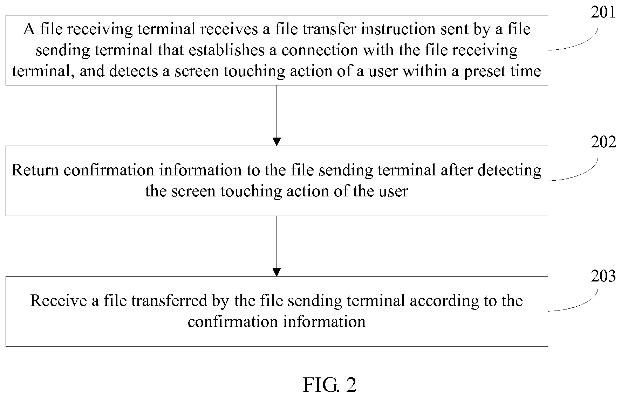

This embodiment further provides a file transfer method. The method may be executed by a file receiving terminal. Referring to FIG. 2, a specific process of the method is as follows:
201: A file receiving terminal receives a file transfer instruction sent by a file sending terminal that establishes a connection with the file receiving terminal, and detects a screen touching action of a user within a preset time.
202: Return confirmation information to the file sending terminal after detecting the screen touching action of the user.
203: Receive a file transferred by the file sending terminal according to the confirmation information.

Further, the file transfer instruction carries an instruction type and file information.

The returning confirmation information to the file sending terminal specifically includes:
after confirming, according to the received file information, that an operation supports the instruction type, returning the confirmation information to the file sending terminal;
where the file information includes at least one of a file name, a format, a type, and a size.

According to a method provided in this embodiment, after confirming that a detected screen touching action of a user is a preset file transfer action, a file sending terminal automatically scans a file receiving terminal that establishes a connection with the file sending terminal, and performs a corresponding transfer operation according to a file transfer instruction provided by the preset file transfer action, thereby implementing file transfer according to the detected screen touching action. Therefore, a used transfer manner does not need to be selected each time a file is transferred, implementing fast file transfer by using simple screen touching actions.

To make the method provided in the foregoing embodiment clearer, the file transfer method is described in detail with reference to the content of the foregoing embodiment and by using Embodiment 2 and Embodiment 3 as an example. For details, see the following Embodiment 2 and Embodiment 3.

### Embodiment 2

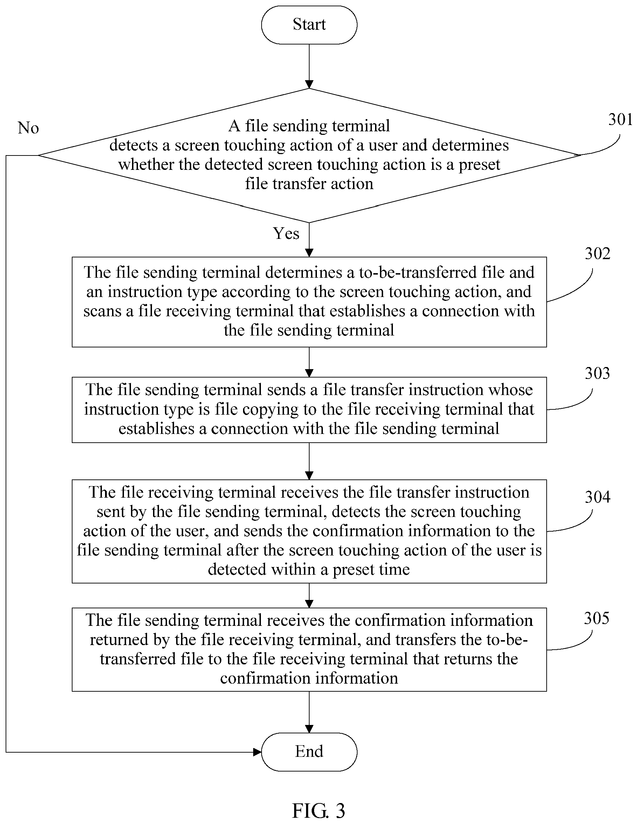

This embodiment provides a file transfer method. For ease of description, this embodiment uses file transfer implemented by a file sending terminal and a file receiving terminal that establishes a connection with the file sending terminal as an example to describe the method provided in this embodiment in detail. Referring to FIG. 3, a process of the method is specifically as follows:
301: The file sending terminal detects a screen touching action of a user and determines whether the detected screen touching action is a preset file transfer action; and if yes, performs step 302; if no, the process ends.

For this step, this embodiment does not limit a manner for detecting the screen touching action of the user by the file sending terminal. In a specific implementation, the detection can be implemented by using the conventional technology for detecting the screen touching action. Specifically, the preset file transfer action may be touching and holding a selected file and quickly sliding out of a left edge or a right edge of a screen of the file sending terminal in a touching state, that is, a track corresponding to the preset screen touching action is a track of sliding out of the edge of the file sending terminal; the preset file transfer action may further be sliding a track in a preset shape on the screen of the file sending terminal, for example, sliding a track in a triangular shape or sliding a track in a tick shape, that is, the track of the preset file transfer action is the track in a preset shape. This embodiment does not limit the specific preset shape. Besides the foregoing two types of preset file transfer actions, the preset file transfer action may also be another preset file transfer action, which is not limited herein. In a specific implementation, for example, the preset file transfer action is touching and holding the selected file and quickly sliding out of the right edge of the screen of the file sending terminal. If a duration of the detected screen touching action of the user reaches a preset length and the track of the screen touching action is sliding out of the right edge of the screen, it is determined that the screen touching action is the preset file transfer action, and content in step 302 is performed; and if the detected screen touching action of the user is another screen touching action, the operation process of file transfer ends, the processing may be performed according to an operation of another screen touching action, and the screen touching action of the user continues to be detected.

302: The file sending terminal determines a to-be-transferred file and an instruction type according to the screen touching action and scans the file receiving terminal that establishes a connection with the file sending terminal.

For this step, after it is confirmed that the screen touching action of the user is the preset file transfer action, to implement file transfer, this step includes a process of determining the to-be-transferred file according to the screen touching action. A specific determining manner may be determining a file corresponding to an icon at which a start point of the screen touching action is located as the to-be-transferred file, or another manner may be adopted, which is not limited in the present invention. Further, because a battery icon or a drop-down menu in a main interface cannot be used for transfer, after it is detected that the screen touching action of the user is the preset file transfer action and the to-be-transferred file is determined, whether the to-be-transferred file can be used for transfer further needs to be confirmed. In a specific implementation, whether the selected file can be used for transfer is determined by checking an attribute of a target selected by the user. If the attribute of the target is a file format such as txt, pdf, and exe, the selected file can be used for transfer.

Besides determining the to-be-transferred file according to the screen touching action of the user, to enable the terminal that receives the to-be-transferred file to be clear about an operation on the file, the method provided in this embodiment further includes a step of determining an instruction type of a subsequently sent instruction according to the detected screen touching action. The instruction type includes but is not limited to file copying and file displaying. For example, if the detected screen touching action is a single-point screen touching action and the single-point screen touching action is the preset file transfer action, it is determined that the instruction type is the file copying; and if the to-be-transferred file is currently displayed in a full screen, the detected screen touching action is a multi-point screen touching action, and the screen touching action of at least one point is the preset file transfer action, it is determined that the instruction type is the file displaying. Besides these two types of instruction types, another instruction type may be included according to an actual requirement, which is not limited herein. This embodiment is described only by using the instruction for implementing file copying according to the single-point screen touching action as an example.

After determining the to-be-transferred file and the instruction type, the file receiving terminal that establishes the connection with the file sending terminal may be determined by scanning the connection, thereby determining to which terminal the to-be-transferred file is transferred. In a specific implementation, a priority sequence of scanning may be set to USB (Universal Serial Bus), NFC (Near Field Communication), WIFI (Wireless Fidelity) direct connection, and Bluetooth, or may be set to another connection manner with a high priority. It is determined according to the scanned connection manner whether the file receiving terminal that establishes a connection with the file sending terminal in the specific connection manner exists; and if the file receiving terminal does not exist, a next connection manner is scanned until the file receiving terminal that establishes a connection with the file sending terminal is found by scanning. A specific scanning manner belongs to the prior art, which is not further described herein.

303: The file sending terminal sends a file transfer instruction whose instruction type is file copying to the file receiving terminal that establishes the connection with the file sending terminal.

Specifically, the file transfer instruction carrying the instruction type and file information is sent to the file receiving terminal over the established connection. A type of the file transfer instruction is file copying. The file information includes but is not limited to a file name, a format, a type, a size, and the like, which is not limited in this embodiment. For example, if the to-be-transferred file is an application program named XX, besides the instruction type of file copying, the file information such as the name XX, the file format .exe, and the size 122MB is also further carried in the sent file transfer instruction.

In addition, because a one-to-many connection manner exists, for example, a Bluetooth connection, if it is found by scanning that multiple terminals establish connections with the file sending terminal in the Bluetooth connection manner, that is, it is found by scanning that multiple file receiving terminals establish connections with the file sending terminal, the file transfer instruction may be sent in a broadcast manner to the multiple file receiving terminals found by scanning. For a situation in which the file sending terminal finds by scanning that multiple file receiving terminals establish connections with the file sending terminal, after sending the file transmission instruction whose instruction type is file copying to the file receiving terminals that establish connections with the file sending terminal, the file sending terminal may directly transfer the file to all the file receiving terminals that establish connections with the file sending terminal. Therefore, a process in step 304, that is, returning confirmation information by the file receiving terminal after the screen touching action of the user is detected, can be omitted. However, for a situation in which the file sending terminal finds by scanning that multiple file receiving terminals establish connections with the file sending terminal, if the user hopes to transfer the file only to one or more of file receiving terminals thereof, instead of all the file receiving terminals, to avoid a misoperation, in the method provided in this embodiment, after performing the screen touching action on the file sending terminal, the user can further perform the screen touching action on the selected file receiving terminal; and the file receiving terminal that detects the screen touching action returns the confirmation information, so that the file sending terminal can clearly learn the file receiving terminal to which the file is transferred. Therefore, after sending the file transfer instruction whose instruction type is file copying to the file receiving terminal that establishes a connection with the file sending terminal, the file sending terminal further needs to perform the operation in the subsequent step 304. For details, see the following step.

304: The file receiving terminal receives the file transfer instruction sent by the file sending terminal, detects the screen touching action of the user, and sends confirmation information to the file sending terminal after detecting the screen touching action of the user within a preset time.

For this step, if the file receiving terminal detects the screen touching action of the user within the preset time, and a duration of keeping screen touching exceeds a preset time length, it indicates that the user hopes to transfer the file to the file receiving terminal. For example, file receiving terminals A and B simultaneously receive the file transfer instruction, but a file receiving terminal A does not detect the screen touching action of the user within the preset time, whereas a file receiving terminal B detects the screen touching action of the user, it indicates that the file receiving terminal B is the terminal that finally receives the file, that is, the user hopes to transfer the file to file receiving terminal B, and therefore slides a screen from the file sending terminal to file receiving terminal B.

Further, the preset time is a period of time after the file transfer instruction is received and may be Is or 0.5s, which is not limited in this embodiment; and the time length for continuously touching the screen is a period of time after the receiving terminal detects the screen touching action of the user, which is also not limited in this embodiment and may be set to Is or 0.5s in an actual application.

In addition, considering that there may be a delay in transferring an instruction but the screen touching action of the user, that is, sliding the screen from the file sending terminal to the file receiving terminal, may be very fast, it is necessary to check not only whether the screen touching action occurs within the preset time starting at a moment when the file receiving terminal receives the file transfer instruction, but also whether the screen touching action occurs within a time before the file transfer instruction is received. Because when the file transfer instruction sent by the file sending terminal is not received, if the screen touching action of the user is detected, the file transfer instruction is received when the user remains in a screen touching state, and the screen touching action does not end when receiving the file transfer instruction, a manner for copying the file required by the user can still be used for processing.

Because file types supported by the file sending terminal and the file receiving terminal may not be the same, after receiving the file transfer instruction, the file receiving terminal may acquire information such as the file type and the file size of the transferred file according to the file information carried in the file transfer instruction, and confirms whether the file receiving terminal supports the file type and whether there is sufficient memory space; and if the file receiving terminal supports the file type and there is sufficient memory space, the file receiving terminal returns the confirmation information to the file sending terminal.

305: The file sending terminal receives the confirmation information returned by the file receiving terminal, and transfers the to-be-transferred file to the file receiving terminal that returns the confirmation information.

The confirmation information returned by the file receiving terminal may carry a name or address information of the file receiving terminal, so that the file sending terminal determines the corresponding file receiving terminal after obtaining by parsing, information such as the name, n in the confirmation information, and transfers the to-be-transferred file to the file receiving terminal. For example, if the file sending terminal obtains by parsing, according to the returned confirmation information, that the name of the file receiving terminal is the file receiving terminal B, the file sending terminal sends the to-be-transferred file to file receiving terminal B over an established connection. Certainly, the confirmation information returned by the file receiving terminal may also carry other information that can identify the file receiving terminal, and this embodiment does not limit specific information carried in the confirmation information.

Because the file receiving terminal has received the file transfer instruction whose instruction type is file copying, after receiving the file sent by the file sending terminal, the file receiving terminal stores the received file, implementing file copying and storage from the file sending terminal to the file receiving terminal.

According to a method provided in this embodiment, after confirming that a detected screen touching action of a user is a preset file transfer action, a file sending terminal automatically scans a file receiving terminal that establishes a connection with the file sending terminal, and performs a corresponding transfer operation according to a file transfer instruction provided by the preset file transfer action, thereby implementing a file transfer operation according to the detected screen touching action. Therefore, a used transfer manner does not need to be selected each time a file is transferred, implementing fast file transfer by using simple screen touching actions. In addition, the file receiving terminal detects the screen touching action of the user and performs a corresponding signaling interaction with the file sending terminal, so that originally independent screen touching operations on the two terminals are combined as a function operation set, thereby improving the file transfer accuracy.

### Embodiment 3

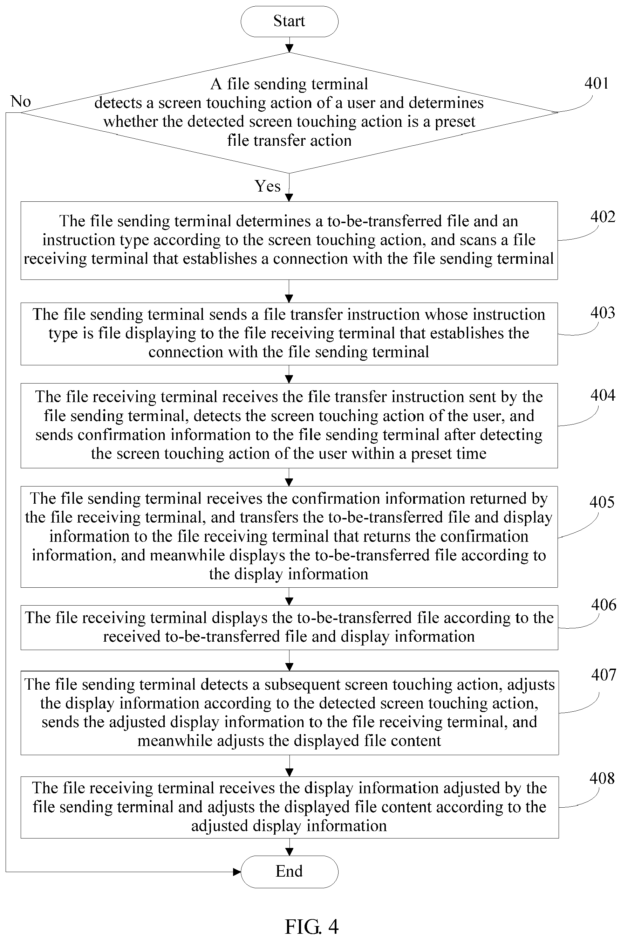

This embodiment provides a file transfer method. For ease of description, the method provided in this embodiment is described in detail by using file displaying on both a file sending terminal and a file receiving terminal that establishes a connection with the file sending terminal as an example. Referring to FIG. 4, a process of the method is specifically as follows:
401: The file sending terminal detects a screen touching action of a user and determines whether the detected screen touching action is a preset file transfer action; and if yes, performs step 402; if no, the process ends.

Specifically, for a specific implementation manner of this step, see the related description in step 301 in the foregoing Embodiment 2. In a specific implementation, if the detected screen touching action of the user is the preset file transfer action, content in step 402 is performed; otherwise, the process ends and the screen touching action of the user continues to be detected.

402: The file sending terminal determines a to-be-transferred file and an instruction type according to the screen touching action and scans the file receiving terminal that establishes a connection with the file sending terminal.

For this step, after confirming that the screen touching action of the user is the preset file transfer action, to implement file transfer, this step includes a process of determining the to-be-transferred file according to the screen touching action. A specific determination manner may be determining a file corresponding to an icon at which a start point of the screen touching action is located as the to-be-transferred file, or another manner may be adopted, which is not limited in the present invention. Further, besides determining the to-be-transferred file according to the screen touching action of the user, to enable the terminal that receives the to-be-transferred file to be clear about an operation on the file, the method provided in this embodiment further includes a step of determining an instruction type of a subsequently sent instruction according to the detected screen touching action. The instruction type includes but is not limited to file copying and file displaying. For example, if the to-be-transferred file is currently displayed in a full screen on the file sending terminal, the detected screen touching action is a multi-point screen touching action, and the screen touching action of at least one point is the preset file transfer action, it is determined that the instruction type is the file displaying. Besides these two types of instruction types, another instruction type may be included according to an actual requirement, which is not limited herein. This embodiment is described only by using the instruction for implementing file displaying according to the multi-point screen touching action as an example.

After determining the to-be-transferred file and the instruction type, the file sending terminal scans the file receiving terminal that establishes the connection with the file sending terminal to make clear to which terminal the file transfer instruction is sent. Specifically, the file receiving terminal that establishes the connection with the file sending terminal may be determined by scanning a connection manner, or may be determined in another scanning manner, which is not limited herein. In a specific implementation, a priority sequence of scanning may be set to USB (Universal Serial Bus), NFC (Near Field Communication), WIFI (Wireless Fidelity) direct connection, and Bluetooth, or may be set to another connection manner with a high priority. It is determined according to the scanned connection manner whether the file receiving terminal that establishes a connection with the file sending terminal in the specific connection manner exists; and if the file receiving terminal does not exist, a next connection manner is scanned according to the set scanning priority sequence until the file receiving terminal that establishes a connection with the file sending terminal is found by scanning. A specific scanning manner belongs to the prior art, which is not further described herein.

403: The file sending terminal sends a file transfer instruction whose instruction type is file displaying to the file receiving terminal that establishes the connection with the file sending terminal.

Specifically, the file transfer instruction carrying the instruction type and file information is sent to the file receiving terminal over the established connection. A type of the file transfer instruction is file displaying. The file information includes but is not limited to a file name, a format, a type, a size, and the like, which is not limited in this embodiment. For example, if the to-be-transferred file is an image file named XX, besides the instruction type of file displaying, the file information such as the name XX, the file format .jpg, and the size 122MB is also carried in the sent file transfer instruction.

In addition, because a one-to-many connection manner exists, for example, a Bluetooth connection, if it is found by scanning that multiple terminals establish connections with the file sending terminal in the Bluetooth connection manner, that is, it is found by scanning that multiple file receiving terminals establish connections with the file sending terminal, the file transfer instruction may be sent in a broadcast manner to the multiple file receiving terminals found by scanning. For a situation in which the file sending terminal finds by scanning that multiple file receiving terminals establish connections with the file sending terminal, after sending the file transmission instruction whose the instruction type is file displaying to the file receiving terminals that establish connections with the file sending terminal, the file sending terminal may directly transfer the file to all the file receiving terminals that establish connections with the file sending terminal. Therefore, a process in step 404, that is, returning confirmation information by the file receiving terminal after the screen touching action of the user is detected, can be omitted. However, for a situation in which the file sending terminal finds by scanning that multiple file receiving terminals establish connections with the file sending terminal, if the user hopes to transfer the file to and display the file only on one or more of file receiving terminals thereof, instead of all the file receiving terminals, to avoid a misoperation, in the method provided in this embodiment, after performing the screen touching action on the file sending terminal, the user can further perform the screen touching action on the selected file receiving terminal; and the file receiving terminal that detects the screen touching action returns the confirmation information, so that the file sending terminal can clearly learn the file receiving terminal to which the file is transferred. Therefore, after sending the file transfer instruction whose the instruction type is file displaying to the file receiving terminal that establishes a connection with the file sending terminal, the file sending terminal further needs to perform the operation in the subsequent step 404. For details, see the following step.

404: The file receiving terminal receives the file transfer instruction sent by the file sending terminal, detects the screen touching action of the user, and sends confirmation information to the file sending terminal after detecting the screen touching action of the user within a preset time.

For this step, if the file receiving terminal detects the screen touching action of the user within the preset time, and a duration of keeping screen touching exceeds a preset time length, it indicates that the user hopes to transfer the file to the file receiving terminal. For example, file receiving terminals A and B simultaneously receive the file transfer instruction, but a file receiving terminal A does not detect the screen touching action of the user within the preset time, whereas a file receiving terminal B detects the screen touching action of the user, it indicates that the file receiving terminal B is the terminal that finally receives the file, that is, the user hopes to transfer the file to file receiving terminal B, and therefore slides a screen from the file sending terminal to file receiving terminal B.

Further, the preset time is a period of time after the file transfer instruction is received and may be Is or 0.5s, which is not limited in this embodiment; and the time length for continuously touching the screen is a period of time after the receiving terminal detects the screen touching action of the user, which is also not limited in this embodiment and may be set to Is or 0.5s in an actual application.

In addition, considering that there may be a delay in transferring an instruction but the screen touching action of the user, that is, sliding the screen from the file sending terminal to the file receiving terminal, may be very fast, it is necessary to check not only whether the screen touching action occurs within the preset time starting at a moment when the file receiving terminal receives the file transfer instruction, but also whether the screen touching action occurs within a time before the file transfer instruction is received. Because when the file transfer instruction sent by the file sending terminal is not received, if the screen touching action of the user is detected, the file transfer instruction is received when the user remains in a screen touching state, and the screen touching action does not end when receiving the file transfer instruction, a manner for transferring the file required by the user can still be used for processing.

Because file types supported by the file sending terminal and the file receiving terminal may not be the same, after receiving the file transfer instruction, the file receiving terminal may acquire information such as the file type and the file size of the transferred file according to the file information carried in the file transfer instruction, and judges whether the file receiving terminal supports the file type and whether there is sufficient memory space; and if the file receiving terminal supports the file type and there is sufficient memory space, the file receiving terminal returns the confirmation information to the file sending terminal.

405: The file sending terminal receives the confirmation information returned by the file receiving terminal, and transfers the to-be-transferred file and display information to the file receiving terminal that returns the confirmation information, and meanwhile displays the to-be-transferred file according to the display information.

The confirmation information returned by the file receiving terminal may carry a name or address information of the file receiving terminal, so that the file sending terminal determines the corresponding file receiving terminal after obtaining by parsing, information such as the name, from the confirmation information, and transfers the to-be-transferred file to the file receiving terminal. For example, if the file sending terminal obtains by parsing, according to the returned confirmation information, that the name of the file receiving terminal is the file receiving terminal B, the file sending terminal sends the to-be-transferred file to file receiving terminal B over an established connection. Certainly, the confirmation information returned by the file receiving terminal may also carry other information that can identify the file receiving terminal, and this embodiment does not limit specific information carried in the confirmation information.

After the confirmation information returned by the file receiving terminal is received, to control an image form displayed by the file receiving terminal, the method provided by this embodiment further includes a step of sending the display information when the file sending terminal sends the to-be-transferred file to the file receiving terminal. The display information includes but is not limited to information such as a size of the displayed file, that is, controlling a range of the to-be-transferred file displayed by the file receiving terminal. In an actual application process, the file sending terminal may set the display information according to the screen touching action of the user. For example, if the detected screen touching action of the user is a multi-point screen touching, tracks of two points are gradually apart, and another point is slid out from the left edge of the file sending terminal while the screen touching action of enlarging the displayed file is performed, it can be determined that the image currently displayed in a full screen needs to be enlarged for displaying, and the right half part is displayed on the file sending terminal and the left half part is displayed on the file receiving terminal; and for this type of screen touching action, the display range in the display information may be pixels of the left half part of the to-be-transferred file, that is, controlling the file receiving terminal to display the left half part of the to-be-transferred file. If the detected screen touching action of the user is sliding out from the right edge of the file sending terminal, it can be determined that the image currently displayed in a full screen needs to be enlarged for displaying, and the left half part is displayed on the file sending terminal and the right left part is displayed on the file receiving end; and for this type of screen touching action, the display information is pixels of the right half part of the to-be-transferred file, that is, controlling the file receiving terminal to display the right half part of the to-be-transferred file.

Besides using the foregoing manner of determining the display information to send the corresponding display information to the file receiving terminal, another manner of determining the display information may be selected, and other display information may also be obtained, which is not limited in this embodiment. Because the size of the to-be-transferred file is known to the file sending terminal, after determining, according to the screen touching action, which part of the to-be-transferred is to be displayed, the file sending terminal can determine a pixel range of the to-be-transferred file displayed at the local end and the file receiving terminal; in addition, irrespective of what type of display information is sent by the file sending terminal to the file receiving terminal, the file sending terminal needs to display the to-be-transferred file according to the display information after sending the to-be-transferred file to the file receiving terminal. For example, if the display information sent by the file sending terminal to the file receiving terminal is the pixels of the right half part of the to-be-transferred file, the file sending terminal displays the left half part of the to-be-transferred file; and if the display information sent by the file sending terminal to the file receiving terminal is the pixels of the left half part of the to-be-transferred file, the file sending terminal displays the right half part of the to-be-transferred file.

406: The file receiving terminal displays the to-be-transferred file according to the received to-be-transferred file and display information.

Specifically, because the file receiving terminal previously receives the file transfer instruction whose instruction type is image displaying, after receiving the to-be-transferred file and the display information sent by the file sending terminal, the file receiving terminal can display the to-be-transferred file according to the display information, and content displayed by the file sending terminal combined with the content displayed by the file receiving terminal are the entire to-be-transferred file.

It should be noted that, to display one file on two terminals, especially to display one image file, when the method provided by this embodiment is implemented, two terminals of the same specifications can be adopted, that is, the specifications of the file sending terminal and file receiving terminal are the same, for example, models of two terminals are the same or screen pixels are the same, so as to ensure that two parts of one image that are separately displayed on the two terminals can be spliced into a complete image.

In addition, according to the method provided by this embodiment, because both the file sending terminal and the file receiving terminal need to detect the screen touching action of the user, a situation in which two terminals display the same file is ended accordingly once the screen touching action disappears. For a situation in which the screen touching action does not disappear, after the file sending terminal and the file receiving terminal separately display a part of the to-be-transferred file, the screen touching action may also subsequently continue to occur on the two terminals. For a processing manner after the subsequent screen touching action occurs, see the following steps.

407: The file sending terminal detects a subsequent screen touching action, adjusts the display information according to the detected screen touching action, sends the adjusted display information to the file receiving terminal, and meanwhile adjusts the displayed file content.

Specifically, the file sending terminal detects the screen touching action of the user and adjusts the display information according to the detected screen touching action; in an actual application, the corresponding display information may be adjusted in real time according to a distance between two points of screen touching on two terminals, and the displayed file is enlarged or shrunk. For example, it may be set as follows: the file is enlarged for displaying when the distance is increased, or the file is shrunk for displaying when the distance is shorter. Regardless of enlarging or shrinking, the file sending terminal can determine the adjusted display information according to a display situation of the file and send the adjusted display information to the file receiving terminal, so that the two terminals simultaneously adjust the displayed file content.

408: The file receiving terminal receives the display information adjusted by the file sending terminal, and adjusts the displayed file content according to the adjusted display information.

For this step, the file receiving terminal performs corresponding processing on the displayed file according to the received adjusted display information, that is, displays the file according to the pixels in the adjusted display information.

According to a method provided in this embodiment, after confirming that a detected screen touching action of a user is a preset file transfer action, a file sending terminal automatically scans a file receiving terminal that establishes a connection with the file sending terminal, and performs a corresponding transfer operation according to a file transfer instruction provided by the preset file transfer action, thereby implementing a file transfer and display operation according to the detected screen touching action. Therefore, a used transfer manner does not need to be selected each time a file is transferred, implementing fast file transfer and split-screen displaying of the file by using simple screen touching actions. In addition, the file receiving terminal detects the screen touching action of the user and performs a corresponding signaling interaction with the file sending terminal, so that originally independent screen touching operations on the two terminals are combined as a function operation set, thereby improving the file transfer accuracy.

### Embodiment 4

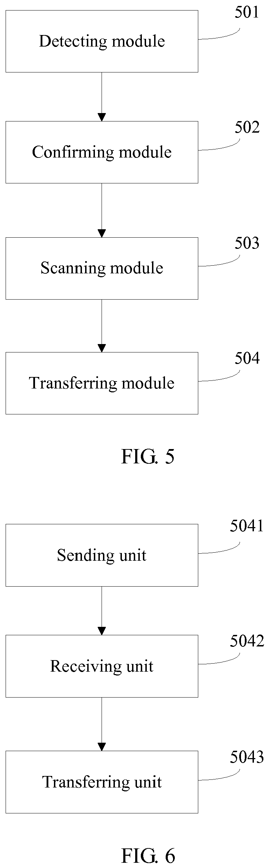

This embodiment provides a file sending terminal. The file sending terminal is configured to perform steps for sending a file in the foregoing Embodiment 1, Embodiment 2, and Embodiment 3. Referring to FIG. 5, the file sending terminal includes:
a detecting module 501, configured to detect a screen touching action of a user;
a confirming module 502, configured to determine a to-be-transferred file according to the detected screen touching action after confirming that the screen touching action detected by the detecting module 501 is a preset file transfer action;
a scanning module 503, configured to: after confirming that the screen touching action detected by the detection module 501 is the preset file transfer action, scan a file receiving terminal that establishes a connection with the terminal, where the preset file transfer action has a corresponding file transfer instruction; and
a transferring module 504, configured to perform a corresponding transfer operation according to the file transfer instruction.

Referring to FIG. 6, the transferring module 504 specifically includes:
a sending unit 5041, configured to send the corresponding file transfer instruction to the file receiving terminal scanned by the scanning module 503, so that the file receiving terminal that receives the file transfer instruction returns confirmation information after detecting the screen touching action of the user within a preset time;
a receiving unit 5042, configured to receive the confirmation information returned by the file receiving terminal; and
a transferring unit 5043, configured to transfer the to-be-transferred file determined by the confirming module 502 to the file receiving terminal that returns the confirmation information.

The sending unit 5041 is further configured to: if the scanning module 503 finds by scanning that multiple file receiving terminals establish connections with a local end, send, in a broadcast manner, the file transfer instruction to the multiple file receiving terminals found by scanning, so that the file receiving terminals that receive the file transfer instruction separately detect the screen touching action of the user and return the confirmation information after detecting the screen touching action of the user.

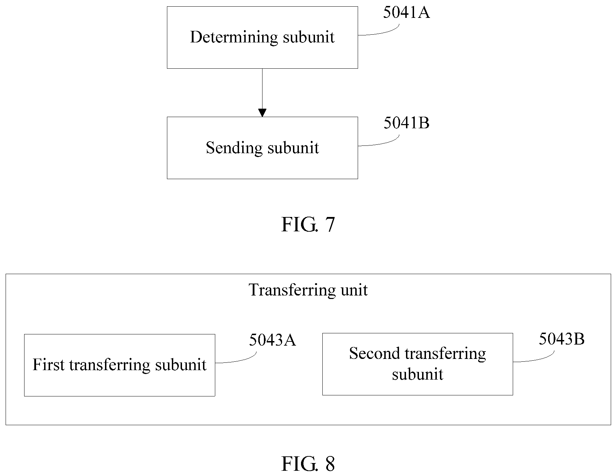

Referring to FIG. 7, the sending unit 5041 specifically includes:
a determining subunit 5041A, configured to determine an instruction type according to the detected screen touching action; and
a sending subunit 5041B, configured to send the file transfer instruction carrying the instruction type determined by the determining subunit 5041A and file information to the file receiving terminal, so that the file receiving terminal returns the confirmation information to the file sending terminal after confirming, according to the received file information, that an operation supports the instruction type;
where the file information includes at least one of a file name, a format, a type, and a size.

Specifically, the determining subunit 5041A is specifically configured to: if the detected screen touching action is a single-point screen touching action and the single-point screen touching action is the preset file transfer action, determine that the instruction type is file copying; and if the to-be-transferred file is currently displayed in a full screen, the detected screen touching action is a multi-point screen touching action, and the screen touching action of at least one point is a preset file transfer action, determine that the instruction type is file displaying.

Further, the instruction type includes file copying and file displaying. Referring to FIG. 8, the transferring unit 5043 specifically includes:
a first transferring subunit 5043A, configured to: if the instruction type carried in the file transfer instruction is the file copying, transfer the to-be-transferred file to the file receiving terminal that returns the confirmation information, so that the file receiving terminal receives and stores the to-be-transferred file; and
a second transferring subunit 5043B, configured to: if the instruction type carried in the file transfer instruction is the file displaying, transfer the to-be-transferred file and display information to the file receiving terminal that returns the confirmation information, so that the file receiving terminal displays the to-be-transferred file according to the display information.

In addition, the second transferring subunit 5043B is further configured to adjust the display information according to a subsequent screen touching action, and send the adjusted display information to the file receiving terminal, so that the file receiving terminal adjusts the displayed to-be-transferred file according to the adjusted display information.

A file sending terminal provided in this embodiment, after confirming that a detected screen touching action of a user is a preset file transfer action, automatically scans a file receiving terminal that establishes a connection with the file sending terminal, and performs a corresponding transfer operation according to a file transfer instruction provided by the preset file transfer action, thereby implementing file transfer according to the detected screen touching action. Therefore, a used transfer manner does not need to be selected each time a file is transferred, implementing fast file transfer by using simple screen touching actions.

### Embodiment 5

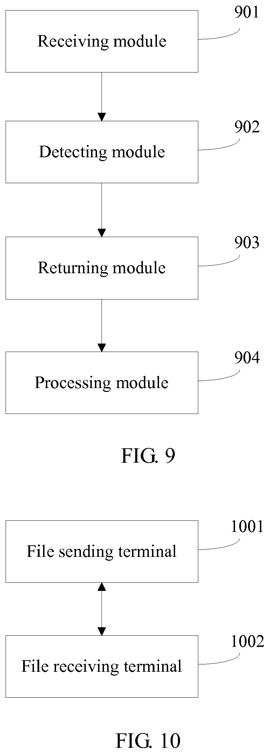

This embodiment provides a file receiving terminal. The file receiving terminal is configured to perform steps for receiving a file in the foregoing Embodiment 1, Embodiment 2, and Embodiment 3. Referring to FIG. 9, the file receiving terminal includes:
a receiving module 901, configured to receive a file transfer instruction sent by a file sending terminal that establishes a connection with the receiving module;
a detecting module 902, configured to detect a screen touching action of a user within a preset time;
a returning module 903, configured to return confirmation information to the file sending terminal after the detecting module 902 detects the screen touching action of the user; and
a processing module 904, configured to receive a file transferred by the file sending terminal.

The file transfer instruction received by the receiving module 901 carries an instruction type and file information.

The returning module 903 is specifically configured to return the confirmation information to the file sending terminal after confirming, according to the file information received by the receiving module 901, that an operation supports the instruction type.

The file information includes at least one of a file name, a format, a type, and a size.

A file receiving terminal provided by this embodiment, after receiving an instruction sent by a file sending terminal, detects a screen touching action of a user and returns a confirmation to the file sending terminal according to the detected screen touching action, so that an operation of transferring the file from the file sending terminal to file receiving terminal is performed. This not only implements fast file transfer by using simple screen touching actions, but also improves the file transfer accuracy.

### Embodiment 6

This embodiment provides a file transfer system. Referring to FIG. 10, the system includes a file sending terminal 1001 and a file receiving terminal 1002.

The file sending terminal 1001 is the file sending terminal provided in the foregoing Embodiment 4, and the file receiving terminal 1002 is the file receiving terminal provided in the foregoing Embodiment 5.

In a system provided in this embodiment, after confirming that a detected screen touching action of a user is a preset file transfer action, a file sending terminal automatically scans a file receiving terminal that establishes a connection with the file sending terminal, and performs a corresponding transfer operation according to a file transfer instruction provided by the preset file transfer action, thereby implementing a file transfer operation according to the detected screen touching action. Therefore, a used transfer manner does not need to be selected each time a file is transferred, implementing fast file transfer by using simple screen touching actions. In addition, the file receiving terminal detects the screen touching action of the user and performs a corresponding signaling interaction with the file sending terminal, so that originally independent screen touching operations on the two terminals are combined as a function operation set, thereby improving the file transfer accuracy.

It should be noted that when the file sending terminal and file receiving terminal provided in the foregoing embodiment perform data transfer, the division of the foregoing functional modules is used as an example for description. In the actual applications, the foregoing functions may be implemented by different functional modules according to an actual requirement, that is, different functional modules are divided according to the internal structure of the terminal to complete the foregoing all or some functions. In addition, the file transfer system, file sending terminal, file receiving terminal, and file transfer method provided in the foregoing embodiment are based on the same conception. For the detailed implementation process, see the method embodiment, which is not further described herein.

A person of ordinary skill in the art may understand that all or a part of the steps of the embodiments may be implemented by hardware or a program instructing relevant hardware. The program may be stored in a computer readable storage medium. The storage medium may include: a read-only memory, a magnetic disc, an optical disc, or the like.

The foregoing descriptions are merely exemplary embodiments of the present invention, but are not intended to limit the present invention.

## Claims

1. A file transfer method performed by a file sending terminal, the method comprising:
• detecting a screen touching action of a user of the file sending terminal (steps 301, 401);
• after confirming that the screen touching action is a preset file transfer action, scanning for a file receiving terminal that establishes a connection with the file sending terminal and determining a to-be-transferred file according to the screen touching action (step 302, 402);
• after confirming that the screen touching action is the preset file transfer action, performing the steps:
∘ if the detected screen touching action is a single-point screen touching action and the single-point screen touching action is the preset file transfer action, determining as an instruction type a file copying,
∘ if the to-be-transferred file is currently displayed in a full screen on a screen of the file sending terminal, the detected screen touching action is a multi-point screen touching action, and a screen touching action of at least one point is the preset file transfer action, determining that the instruction type is a file displaying,
wherein in a first alternative, the multi-point screen touching action comprises a first touching action of three points and tracks of two points of the three points on the screen of the file sending terminal gradually depart from each other and a track of a third point of the three points moves out of a left edge of file sending terminal,
or,
in a second alternative instead of the first alternative,
the multi-point screen touching action comprises a second touching action of three points and tracks of two points of the three points on a screen of the file sending terminal gradually depart from each other and a track of a third point of the three points moves out of a right edge of file sending terminal;
• if the instruction type is the file copying, performing the steps of:
∘ sending a first file transfer instruction carrying the instruction type of the file copying and file information of the to-be-transferred file to the file receiving terminal, wherein the file information comprises at least one of a file name, a format, a type, and a size (step 303),
∘ after the sending of the first file transfer instruction, receiving a first confirmation information returned by the file receiving terminal (step 304), and subsequently sending the to-be-transferred file to the file receiving terminal that returns the first confirmation information (step 305),
• if the instruction type is the file displaying, performing the steps of:
∘ sending a second file transfer instruction carrying the instruction type of the file displaying and the file information of the to-be-transferred file to the file receiving terminal, wherein the file information comprises at least one of the file name, the format, the type, and the size (step 403),
∘ after the sending of the second file transfer instruction, receiving a second confirmation information returned by the file receiving terminal (step 405),
∘ transferring the to-be-transferred file and display information to the file receiving terminal that returns the second confirmation information (step 405), wherein the display information contains:
▪ in the first alternative a first display range being pixels of a left half of the to be transferred file, wherein the display range is used for controlling the file receiving terminal to display the left half of the to be transferred file,
▪ in the second alternative a second display range being pixels of a right half of the to be transferred file, wherein the display range is used for controlling the file receiving terminal to display the right half of the to be transferred file;
∘ displaying in the first alternative the right half of the to be transferred file, or
displaying in the second alternative the left half of the to be transferred file.

2. The method according to claim 1, wherein after the transferring the to-be-transferred file and the display information to the file receiving terminal that returns the confirmation information, the method further comprises:
adjusting the display information according to a subsequent screen touching action, and sending the adjusted display information to the file receiving terminal.

3. A file sending terminal configured and intended to perform any of the methods according to claims 1 - 2.

## Patentansprüche

1. Dateiübertragungsverfahren, das von einem Dateisendeendgerät ausgeführt wird, wobei das Verfahren umfasst:
• Erkennen einer Bildschirmberührungsaktion eines Benutzers des Dateisendeendgeräts (Schritte 301, 401);
• nach dem Bestätigen, dass die Bildschirmberührungsaktion eine voreingestellte Dateiübertragungsaktion ist, Suchen, nach einem Dateiempfangsendgerät, das eine Verbindung mit dem Dateisendeendgerät einrichtet, und Ermitteln einer zu übertragenden Datei gemäß der Bildschirmberührungsaktion (Schritte 302, 402);
• nach dem Bestätigen, dass die Bildschirmberührungsaktion die voreingestellte Dateiübertragungsaktion ist, Ausführen der folgenden Schritte:
* wenn die erkannte Bildschirmberührungsaktion eine Einzelpunkt-Bildschirmberührungsaktion ist und die Einzelpunkt-Bildschirmberührungsaktion die voreingestellte Dateiübertragungsaktion ist, Ermitteln eines Kopierens einer Datei als einen Befehlstyp,
* wenn die zu übertragende Datei aktuell in einem Vollbildschirm auf einem Bildschirm des Dateisendeendgeräts angezeigt wird, die erkannte Bildschirmberührungsaktion eine Mehrpunkt-Bildschirmberührungsaktion ist und eine Bildschirmberührungsaktion von mindestens einem Punkt die voreingestellte Dateiübertragungsaktion ist, Ermitteln, dass der Befehlstyp ein Darstellen einer Datei ist,
wobei in einer ersten Alternative die Mehrpunkt-Bildschirmberührungsaktion eine erste Berührungsaktion von drei Punkten umfasst, und Spuren von zwei Punkten der drei Punkte auf dem Bildschirm des Dateisendeendgeräts nur allmählich voneinander abweichen und sich eine Spur eines dritten Punkts der drei Punkte über einen linken Rand aus dem Dateisendeendgerät hinaus bewegt,
oder
wobei in einer zweiten Alternative anstatt der ersten Alternative, die Mehrpunkt-Bildschirmberührungsaktion eine zweite Berührungsaktion von drei Punkten umfasst, und Spuren von zwei Punkten der drei Punkte auf einem Bildschirm des Dateisendeendgeräts nur allmählich voneinander abweichen und sich eine Spur eines dritten Punkts der drei Punkte über einen rechten Rand aus dem Dateisendeendgerät hinaus bewegt;
• wenn der Befehlstyp das Kopieren von Dateien ist, Ausführen der folgenden Schritte:
* Senden eines ersten Dateiübertragungsbefehls, der den Befehlstyp des Kopierens von Dateien und Dateiinformationen der zu übertragenden Datei mitführt, an das Dateiempfangsendgerät, wobei die Dateiinformationen mindestens einen eines Dateinamens, eines Formats, eines Typs und einer Größe umfassen (Schritt 303),
* nach dem Senden des ersten Dateiübertragungsbefehls, Empfangen von ersten Bestätigungsinformationen in dem Dateiempfangsendgerät (Schritt 304), und nachfolgend Senden der zu übertragenden Datei an das Dateiempfangsendgerät, das die ersten Bestätigungsinformationen zurücksendet (Schritt 305),
• wenn der Befehlstyp das Anzeigen von Dateien ist, Ausführen der folgenden Schritte:
* Senden eines zweiten Dateiübertragungsbefehls, der den Befehlstyp des Anzeigens von Dateien und die Dateiinformationen der zu übertragenden Datei mitführt, an das Dateiempfangsendgerät, wobei die Dateiinformationen mindestens einen des Dateinamens, des Formats, des Typs und der Größe umfassen (Schritt 403),
* nach dem Senden des zweiten Dateiübertragungsbefehls, Empfangen von zweiten Bestätigungsinformationen, die von dem Dateiempfangsendgerät zurückgesendet werden (Schritt 405),
* Übertragen der zu übertragenden Datei und von Anzeigeinformationen an das Dateiempfangsendgerät, das die zweiten Bestätigungsinformationen zurücksendet (Schritt 405), wobei die Anzeigeinformationen enthalten:
• in der ersten Alternative, einen ersten Anzeigebereich, der Pixel einer linken Hälfte der zu übertragenden Datei aufweist, wobei der Anzeigebereich verwendet wird zum Steuern des Dateiempfangsendgeräts, um die linke Hälfte der zu übertragenden Datei anzuzeigen,
• in der zweiten Alternative, einen zweiten Anzeigebereich, der Pixel einer rechten Hälfte der zu übertragenden Datei aufweist, wobei der Anzeigebereich verwendet wird zum Steuern des Dateiempfangsendgeräts, um die rechte Hälfte der zu übertragenden Datei anzuzeigen;
* Anzeigen der rechten Hälfte der zu übertragenden Datei in der ersten Alternative, oder Anzeigen der linken Hälfte der zu übertragenden Datei in der zweiten Alternative.

2. Verfahren nach Anspruch 1, wobei das Verfahren nach dem Übertragen der zu übertragenden Datei und der Anzeigeinformationen an das Dateiempfangsendgerät, das die Bestätigungsinformationen zurücksendet, außerdem umfasst: Anpassen der Anzeigeinformationen gemäß einer nachfolgenden Bildschirmberührungsaktion und Senden der angepassten Anzeigeinformationen an das Dateiempfangsendgerät.

3. Dateisendeendgerät das konfiguriert und vorgesehen ist zum Ausführen von einem der Verfahren nach den Ansprüchen 1 bis 2.

## Revendications

1. Procédé de transfert de fichiers exécuté par un terminal d'envoi de fichiers, le procédé comprenant :
• la détection d'une action de toucher d'écran d'un utilisateur du terminal d'envoi de fichiers (étapes 301, 401) ;
• après confirmation que l'action de toucher d'écran est une action de transfert de fichiers prédéfinie, le balayage d'un terminal de réception de fichiers qui établit une connexion avec le terminal d'envoi de fichiers et la détermination d'un fichier à transférer en fonction de l'action de toucher d'écran (étapes 302, 402) ;
• après confirmation que l'action de toucher d'écran est l'action de transfert de fichiers prédéfinie, l'exécution des étapes suivantes :
∘ si l'action de toucher d'écran détectée est une action de toucher d'écran à un seul point et que l'action de toucher d'écran à un seul point est l'action de transfert de fichiers prédéfinie, déterminer une copie de fichiers en tant que type d'instruction,
∘ si le fichier à transférer est actuellement affiché en plein écran sur un écran du terminal d'envoi de fichiers, l'action de toucher d'écran détectée est une action de toucher d'écran multipoint, et une action de toucher d'écran d'au moins un point est l'action de transfert de fichiers prédéfinie, déterminer que le type d'instruction est un affichage de fichiers,
dans lequel dans une première alternative, l'action de toucher d'écran multipoint comprend une première action de toucher de trois points et suit deux points parmi les trois points sur l'écran du terminal d'envoi de fichiers qui s'écartent graduellement les uns des autres et un suivi d'un troisième point parmi les trois points se déplace vers l'extérieur d'un bord gauche du terminal d'envoi de fichiers,
ou,
dans une seconde alternative à la place de la première alternative,
l'action de toucher d'écran multipoint comprend une seconde action de toucher des trois points et suit deux points parmi les trois points sur un écran du terminal d'envoi de fichiers qui s'écartent graduellement les uns des autres et un suivi d'un troisième point parmi les trois points se déplace vers l'extérieur d'un bord droit du terminal d'envoi de fichiers ;
• si le type d'instruction est la copie de fichiers, exécuter les étapes consistant à :
∘ envoyer une première instruction de transfert de fichiers acheminant le type d'instruction de la copie de fichiers et des informations de fichiers du fichier à transférer au terminal de réception de fichiers, les informations de fichiers comprenant au moins un élément parmi un nom de fichier, un format, un type et une taille (étape 303),
∘ après l'envoi de la première instruction de transfert de fichiers, recevoir des premières informations de confirmation renvoyées par le terminal de réception de fichiers (étape 304), et ensuite envoyer le fichier à transférer au terminal de réception de fichiers qui renvoie les premières informations de confirmation (étape 305),
• si le type d'instruction est l'affichage de fichiers, exécuter les étapes consistant à :
∘ envoyer une seconde instruction de transfert de fichiers acheminant le type d'instruction de l'affichage de fichiers et les informations de fichiers du fichier à transférer au terminal de réception de fichiers, les informations de fichiers comprenant au moins un élément parmi un nom de fichier, le format, le type et la taille (étape 403),
∘ après l'envoi de la seconde instruction de transfert de fichiers, recevoir des secondes informations de confirmation renvoyées par le terminal de réception de fichiers (étape 405),
∘ transférer le fichier à transférer et afficher des informations sur le terminal de réception de fichiers qui renvoie les secondes informations de confirmation (étape 405), les informations d'affichage contenant :
▪ dans la première alternative, une première plage d'affichage comportant des pixels d'une moitié gauche du fichier à transférer, la plage d'affichage étant utilisée pour commander au terminal de réception de fichiers d'afficher la moitié gauche du fichier à transférer,
▪ dans la seconde alternative, une seconde plage d'affichage comportant des pixels d'une moitié droite du fichier à transférer, la plage d'affichage étant utilisée pour commander au terminal de réception de fichiers d'afficher la moitié droite du fichier à transférer ;
∘ afficher dans la première alternative la moitié droite du fichier à transférer, ou
afficher dans la seconde alternative la moitié gauche du fichier à transférer.

2. Procédé selon la revendication 1, dans lequel après le transfert du fichier à transférer et des informations d'affichage au terminal de réception de fichiers qui renvoie les informations de confirmation, le procédé comprend en outre :
le réglage des informations d'affichage en fonction d'une action de toucher d'écran ultérieure, et l'envoi des informations d'affichage réglées au terminal de réception de fichiers.

3. Terminal d'envoi de fichiers conçu et prévu pour exécuter l'un quelconque des procédés selon les revendications 1 et 2.
